Europäisches Patentamt

European Patent Office

Office européen des brevets

(11) Publication number: **0 375 595**
**A2**

## (12) EUROPEAN PATENT APPLICATION

(21) Application number: 89630230.4

(22) Date of filing: 19.12.89

(51) Int. Cl.5 **C09J 5/02, B32B 15/08**

(30) Priority: 19.12.88 US 285923

(43) Date of publication of application:
**27.06.90 Bulletin 90/26**

(84) Designated Contracting States:
**BE CH DE FR GB IT LI NL SE**

(71) Applicant: UNITED TECHNOLOGIES
CORPORATION
United Technologies Building 1, Financial
Plaza
Hartford, CT 06101(US)

(72) Inventor: Pike, Roscoe A.
55 Windmill Drive
Granby Connecticut 06035(US)

(74) Representative: Schmitz, Jean-Marie et al
OFFICE DENNEMEYER S.à.r.l. P.O. Box 1502
L-1015 Luxembourg(LU)

(54) **Combined abrasive/amorphous hydrated metal oxide primer as a surface treatment for organic adhesively bonded titanium joints.**

(57) A method of adhesively bonding articles, at least one of which is a titanium alloy, resulting in a joint resistant to crack propagation. A layer of metal alkoxide is applied to the titanium article and the metal alkoxide layer is exposed to heat and moisture. A polymeric adhesive is disposed between the articles and pressure and optionally heat are applied to the articles. The improvement comprises exposing the surface of the titanium article, prior to application of the metal alkoxide, to a substantially noncorrosive, nonanodic environment and abrasively treating the titanium article.

FIG. 1

## Combined Abrasive/Amorphous Hydrated Metal Oxide Primer as a Surface Treatment for Organic Adhesively Bonded Titanium Joints

Cross Reference to Related Application

Attention is directed to commonly assigned allowed copending application entitled "Pretreatment Process for Amorphous Hydrated Metal Oxide Primer for Organic Adhesively Bonded Joints, Serial No. 195,489 which discloses material similar to that in the present application, the disclosure of which is hereby incorporated by reference.

Technical Field

The field of art to which this invention pertains is methods for adversely bonding joints.

Background Art

Weight saving and manufacturing cost benefits have led to the increase in use of adhesively bonded structures in the aircraft and aerospace industries. In order to be a viable alternative to, for example, metal fasteners, these adhesive bonds should maintain the strength typical of conventional fastener systems. In many applications the bonds are put under a variety of environmental and mechanical stresses. For example, frequently these bonds are exposed over long periods of time to wet environments which can result in a loss of bond strength. The loss of strength can result from the extension of cracks and other deformations that occur in the adhesive and which are exacerbated by the moist environment. As a result of this deficiency, extensive research and development efforts have been undertaken to define methods and identify materials which improve bonded joint performance in humid conditions. For example, it is known that surface preparation is important in the bonding of aluminum and titanium. Thus, it is essential that before bonding, the adherend is cleaned and chemically pretreated to produce a surface which combines with the adhesive to develop the bond strengths which meet application requirements. A variety of pretreatments for titanium have been developed to produce improved bondability. These include acid etching using Pasa JELL 107™ etch (Smetco Corp., California), Picatinny Arsenal etch, alkaline hydrogen peroxide etch, and chromic acid anodized (CAA) and sodium hydroxide anodized (SHA). These pretreatments typically utilize corrosive conditions, anodization equipment or environmentally hazardous chemicals, such as hydrogen fluoride, chromium or hydrogen peroxide and as such may be harmful or complicated, particularly in field applications. The CAA anodization method is generally accepted as the most effective surface treatment in terms of bond strength and durability at the present time. Commonly assigned U.S. Patent No. 4,623,591 describes an amorphous hydrated primer for organic adhesively bonded joints that has proved simple and effective yet environmentally safer that the conventional chromium-containing primer systems used with such surface treatments. Although the above surface preparations have provided advantages, there is a continuing search for ways to improve this technology.

Accordingly, there is a constant search in this field of art for new methods of providing lightweight, structurally sound, adhesively bonded metal joints.

Disclosure of Invention

The invention is directed to a method of adhesively bonding articles, at least one of which is a titanium alloy, resulting in a joint resistant to crack propagation. A layer of metal alkoxide is applied to the titanium article and the metal alkoxide layer is exposed to heat and moisture. A polymeric adhesive is disposed between the articles and pressure and optionally heat are applied to the articles. The improvement comprises exposing the surface of the titanium article, prior to application of the metal alkoxide, to a substantially noncorrosive, nonanodic environment and abrasively treating the titanium article.

This pretreatment for metal surfaces when used in combination with amorphous metal oxide primer for adhesively bonded titanium or titanium alloy joints reduces the need for the more technically complicated and environmentally hazardous pretreatments while providing bonds that are resistant to crack propagation. Such a system is particularly attractive for field repair in environmentally restricted areas. Thus, this invention makes a significant advancement by providing new technology relating to adhesive bonding.

Other features and advantages will be apparent from the specification and claims and from the accompanying drawings which illustrate an embodiment of the invention.

Brief Description of Drawings

Fig. 1 illustrates the crack propagation for adhesively bonded titanium joints where organic primed surfaces have had various caustic or anodized titanium pretreatments and amorphous hydrated aluminum oxide primed surfaces where there has been no such pretreatment.

Fig. 2 illustrates crack propagation as a function of the number of amorphous hydrated aluminum oxide coatings for adhesively bonded titanium joints.

Best Mode for Carrying Out the Invention

The titanium article surface (hereinafter titanium is meant to include titanium alloys) is pretreated by exposure to an abrasive treatment. A variety of abrasive treatments such as abrasive sheets (emory cloth) and SCOTCHBRITE™ abrasive (3M Company) may be used. However, the preferred treatment is conventional grit blasting. Generally, the grit blasting is performed at ambient temperatures and typically comprises directing a stream of ceramic particles preferably alumina, silica or boron nitride at the article surface. Typically, conventional grit blasting is performed for a period of about 0.5 minutes to about 2 minutes under 20-80 psi pressure. The articles may be cleaned with conventional solvents prior to and post grit blasting as is conventionally done. Surprisingly, this conventional grit blasting pretreatment results in equivalent or improved bonding in comparison to grit blasted articles that are additionally pretreated with standard corrosive or anodic pretreatments (such as CAA or Pasa JELL) applied prior to conventional organic type primers. It is believed this is because the inorganic primer provides an active clean oxide surface on which the organic adhesive can readily spread and interact to produce a stable interface.

Once the metal article is pretreated, any method of bonding may be used for the practice of this invention that provides an amorphous, hydrated metal oxide coated metal article bonded to another article with an adhesive as described in commonly assigned U.S. Patent No. 4,623,591 and below. If a plurality of metal articles are to be bonded, it is preferred to prime each metal article. It is also preferred to apply a layer of metal alkoxide (described below) to the metal article(s) by a solvent casting, dipping or spraying procedure. The metal alkoxide coated metal articles are then maintained at a temperature of about 25°C to about 300°C in the presence of moisture. Below 25°C, the reaction kinetics are typically too slow and above 300°C loss of desirable metal properties or crystallization of the oxide surface may occur with an accompanying loss of mechanical strength. It is especially preferred to heat the metal alkoxide coated articles to a temperature of about 25°C to about 125°C as the lower temperature minimize the risk of mechanical property degradation of, for example, aluminum substrates, such as with aluminum spars which have been shot peened to induce compressive surface stresses. The application of the inorganic primer for field repair situations is also possible with the use of the lower conversion temperature.

Any metal alkoxide that hydrolyzes to give an amorphous hydrated metal oxide (i.e. a monohydroxy metal oxide) may be used in the practice of this invention. Metal alkoxides having the formula $M_x(OR)_y$ where x is 1 and y is 3 or 4 are preferred in forming the metal oxide primer of this disclosure, y being determined by the particular valence of the metal. Typically, a valence of at least 3 is preferable to form a monohydroxy metal oxide. However, alkoxides where y is 2 are preferably combined with alkoxides having higher y values. M is any metal capable of forming a stable alkoxide, which can be purified by, for example, distillation or crystallization without decomposition; as y is defined above essentially all metals meet this requirement. It is preferred that the metal is selected from the group consisting of titanium, silicon, iron, nickel and aluminum. Aluminum is especially preferred. Typically, R can be any organic radical that can be distilled at temperatures below about 300°C. Since the alkoxide ((OR) moiety) is not incorporated into the primer, the important criteria associated with it is that the resultant alcohol can be volatilized at temperatures that are not high enough to damage the primer or substrate. It is preferred that R is an alkane radical from $C_1$ to $C_{10}$. It is especially preferred that R is methyl, ethyl, propyl or sec-butyl as these radicals are volatilized as alcohols at relatively low temperatures. In addition, the alkoxides can be modified by incorporation of varying amounts of additives such as phosphate, silicate or magnesium oxide without adversely affecting the primer properties. Mixtures of the above metal alkoxides may be used in the practice of this invention. In addition, partial hydrolyzates of the metal alkoxides can also be used as starting material, i.e., dimers, trimers, etc. of the monomeric alkoxides.

The above metal alkoxides hydrolyze to amorphous hydrated metal oxides (primer) when exposed to moisture such as atmospheric moisture or moisture on the metal substrate surface and optionally heat as described below. An exemplary reaction believed to occur is that of aluminum alkoxide to hydrated alumina. The initial hydrolyzation reaction of aluminum alkoxides is empirically illustrated as

$$Al(OR_3) + H_2O \; Al(OR)_2(OH) + R(OH) \quad (1)$$

This reaction proceeds rapidly with further hydrolyzation-polymerization to

$$Al(OR)_2(OH) + H_2O \quad > RO- \overset{OH}{\underset{|}{Al}} -O- \overset{OH}{\underset{|}{Al}} -OR + 2 ROH. \ etc. \quad (2)$$

to incorporate n aluminum ions, i.e. $Al_nO_{n-1}(OH)_{(n+2)-x}(OR)_x$ assuming linear polymerization for simplicity. As the reaction proceeds the number of OR groups, i.e. x, relative to n decreases to a value depending on the hydrolysis temperature and available moisture concentration. Under normal application conditions, the ratio of residual OR groups as designated by x is less than 4 and n is 28 or greater. Such low levels of OR do not impede the performance of the primer. In contrast, zirconium alkoxide is believed to hydrolyze to a hydrated oxide, i.e. $ZrO_2 \cdot 1.7 \ H_2O$ having no residual -OR or OH groups.

The thickness of this primer layer can vary effectively from about 15 nanometers (nm) to about 1200 nm. Preferably, the thickness is about 100 nm to about 1000 nm. Above about 1200 nm the layer can be so thick as to create stress risers and to form a weak boundary layer. Below about 100 nm, the layer does not provide the properties such as crack propagation resistance at the levels typically required. In addition, it is preferable to apply the primer to the metal surface with a plurality of layers of metal alkoxide as this facilitates removal of volatiles and solvent which can be more difficult to achieve from a single thick application.

Typically, the articles of this invention comprise titanium or alloys thereof. By alloy is meant the article having the major metal present in greater than a 50 percent by weight (%) amount. In addition, a primed metal article can be bonded to a conventional fiber reinforced polymeric matrix composite such as an epoxy, polyimide, polyester, acrylic, urethane, cellulosic, rubber or phenolic based composite. Examples of fibers include glass, alumina, silicon carbide, graphite, amides and KEVLAR™ fiber (DuPont DeNemours, E.I., Co., Wilmington, Delaware).

Any of the above described metal alkoxides or mixtures thereof can be used to prime any of the above described metal articles, the composition of the mixture having little effect except that it is preferred to prime the titanium article with the aluminum alkoxide.

Any conventional adhesive can be used for the practice of this invention that is useful for bonding articles, particularly metal articles. For example, epoxide, polyimide, acrylic or urethane adhesives are used as these provide the properties most desired such as good strength. It is especially preferred to use epoxy, urethane or polyimide adhesives as they resist environmental stresses, are strong and are frequently chosen for aerospace applications.

Example 1

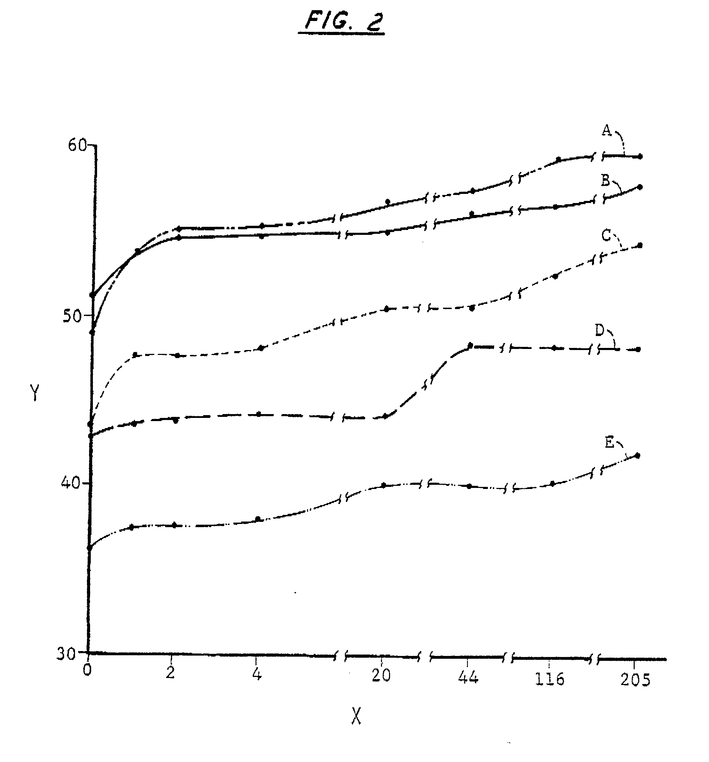

Methylethylketone (MEK) cleaned titanium 6Al-4V alloy specimens were grit blasted with #80 grit alumina under 40 psi pressure and flushed with MEK solvent. The inorganic primer was applied to the rough surface using a one percent toluene solution of E-8385 (Stauffer Chemical Co.) sec-butyl aluminum alkoxide. This was repeated up to seven (7) coatings with 20 minute air dry between each coat. A series of specimens were treated in a like manner to provide a sufficient number of wedge crack test specimens per ASTM D-3672 at each coating thickness. After coating, the specimens were oven-dried at 125°C for 30 minutes. Adhesively bonded joints were prepared using scrim supported FM-330 epoxy film adhesive from American Cyanamid. Wedge crack tests were carried out as specified by the above identified ASTM procedure to give the crack propagation results illustrated in Fig. 2.

Example 2

Ten plates of solvent cleaned titanium 6Al-4V alloy were grit blasted as in Example 1 followed by surface treating of each set of two as follows:
1. Pasa JELL 107 etch,
2. Picatinny Arsenal acid etch
3. CAA
4. & 5. No additional surface treatment except applications of 3 and 7 coats of inorganic primer (1% sec-butyl aluminum alkoxide in toluene) to each pair, respectively.

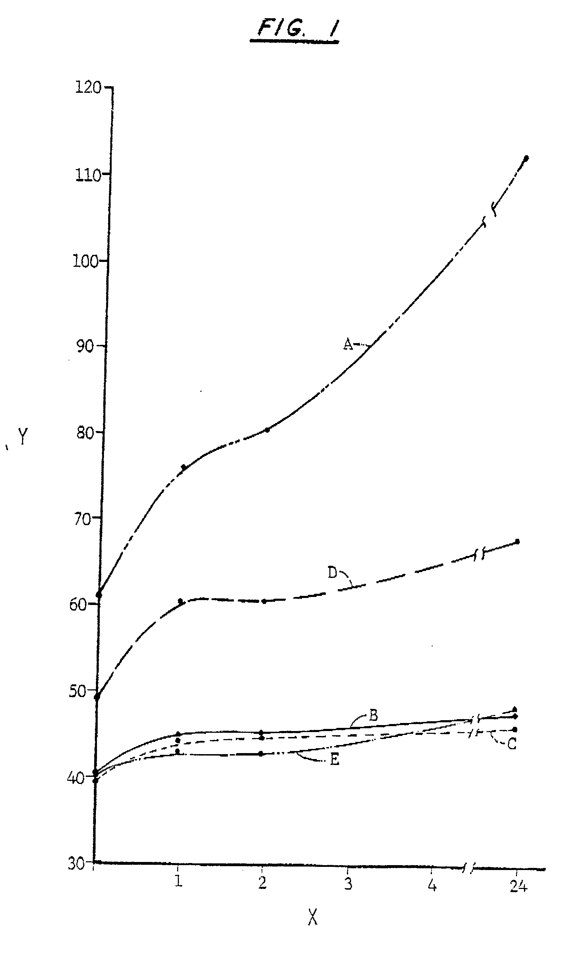

Each pair of plates prepared in 1, 2 and 3 were primed with FM-35 polyimide primer from American Cyanamid. All five pairs of plates were adhesively bonded using FM-35 polyimide adhesive from American Cyanamid. After bonding the five plates were cut to provide wedge crack test specimens for testing per ASTM D-3762. The results of the tests are depicted in Fig. 1.

Fig. 1 illustrates crack propagation in mm Y as a function of time (hours) X at 71°C and 95% R.H. FM 35 polyimide adhesive was used to bond titanium alloy adherends. Curves A, B and C represent polyimide organic primed adherends that have been pretreated with a Picatinny Arsenal etch, Pasa JELL acid etch, and an anodization pretreatment, respectively. In contrast, curves D and E represent amorphous hydrated alumina oxide primed adherends where no acidic or anodization pretreatment was used. Three coats of primer were used for curve D and seven coats of primer were used for curve E. It is clear that the amorphous hydrated aluminum oxide primed articles provide comparable if not better crack propagation resistance to the pretreated joints.

In Fig. 2 crack propagation in mm Y is illustrated as a function of time (hours) X at 71°C and 95% relative humidity (R.H.). The graphs illustrate the crack propagation of titanium adherends bonded with FM 330™ adhesive (American Cyanamid) for increasing number of coatings using amorphous hydrated aluminum oxide compositions. Curves A-E have 0, 1, 3, 5 and 7 coats, respectively.

These grit blast pretreatments coupled with inorganic primer may be used to advantage in bonding titanium to metal or titanium to composites. While this invention has been described in terms of a metal alkoxide a mixture of various metal alkoxides can be used.

The pretreatment process enables preparation of the surface without corrosive environmentally hazardous chemicals, such as chromium or hydrogen fluoride. The fact that the pretreatment when used in conjunction with the primer coat does not have to be as extensive is surprising. Thus, this is a simple procedure in contrast to the generally accepted CAA or Pasa JELL surface treatment, yet in conjunction with the amorphous hydrated metal oxide, it provides improved joint resistance to crack propagation.

The primer coating provides improved crack propagation resistance in moist environments. Yet the inorganic primers can be utilized as thinner coatings than the 0.2 to 0.4 mil layers typical of organic primers. Thicker layers tend to set up stress rises (i.e. weak boundary layer) as the components segregate. Also, because of its thermal stability the inorganic primer can be used equally as well with high temperature adhesives such as polyimides or with low temperature adhesives such as epoxy systems unlike organic primers which are typically temperature specific. Another major advantage of the inorganic primer is that it can be used on metal surfaces which have been treated by a variety of surface treatments and provide the same high level of crack propagation resistance. In contrast, organic primers produce different results dependent upon the surface pretreatments employed. In addition, conventional epoxy-based organic primers use strontium chromates as corrosion inhibitors and these cause toxicity problems in their manufacture and use. This invention provides an amorphous hydrated metal oxide primer for adhesively bonded joints that results in greatly increased crack propagation resistance. Thus, it makes a significant advance in the aerospace industry by providing new technology relating to adhesively bonded joints. Together, the grit blast pretreatment process and amorphous hydrated metal oxide primer provide a simple, environmentally sound, method of adhesively bonding articles.

It should be understood that the invention is not limited to the particular embodiments shown and described herein, but that various changes and modifications may be made without departing from the spirit and scope of this novel concept as defined by the following claims.

## Claims

1. A method of bonding a plurality of articles together, at least one of which is titanium or alloys thereof, by

a) applying to the titanium-containing article surface a layer comprising $M_x(OR)_y$ or combinations thereof wherein

(i) x is 1;

(ii) y is 2, 3 or 4;

(iii) M has a valence of 2, 3 or 4; and

iv) R is an organic radical;

b) exposing the titanium-containing article having the $M_x(OR)_y$ layer thereon to moisture and a temperature of about 25°C to about 300°C; and

c) placing a polymeric adhesive in contact with and between the articles and applying pressure, and optionally heat, to said articles;

wherein the improvement comprises exposing a surface of at least one of the titanium-containing articles, prior to applying the $M_x(OR)_y$ on the surface, to a substantially noncorrosive, nonanodic environment and abrasively treating the titanium-containing surface resulting in a joint resistance to crack propagation.

2. The method of bonding as recited in claim 1 wherein at least one of the articles is a fiber reinforced polymeric composite.

3. The method of bonding as recited in claim 1 wherein M is selected from the group consisting of titanium, silicon, aluminum and magnesium.

4. The method of bonding as recited in claim 1 wherein M is aluminum.

5. The method of bonding as recited in claim 1 wherein the titanium-containing article is grit blasted.

6. The method of bonding as recited in claim 1 wherein $M_xOR_y$ is partially hydrolyzed prior to application to the article surface.

FIG. 1

## FIG. 2